# EUROPÄISCHE PATENTSCHRIFT

(11) **EP 4 241 113 B1**
(45) Veröffentlichungstag und Bekanntmachung des Hinweises auf die Patenterteilung: **23.07.2025**
(21) Anmeldenummer: 21801499.1
(22) Anmeldetag: 27.10.2021
(51) Int. Cl.: G01S 17/42, G01S 17/48, G01S 7/48, G06K 7/14, G01S 17/66, G01S 13/931

(54) **VERFAHREN ZUR POSITIONSMESSUNG, POSITIONSMESSSYSTEME UND MARKIERUNG**
POSITION MEASUREMENT METHOD, POSITION MEASUREMENT SYSTEMS AND MARKING
MÉTHODE DE MESURE DE LA POSITION, SYSTÈMES DE MESURE DE LA POSITION ET MARQUAGE

(30) Priorität: 05.11.2020 EP 20205916
(43) Veröffentlichungstag der Anmeldung: 13.09.2023
(73) Patentinhaber: Hilti Aktiengesellschaft, 9494 Schaan (LI)
(72) Erfinder: KORL, Sascha, 9470 Buchs (CH); SCHMIDT, Peer, 88131 Lindau (DE); KUMAR, Nitish, 9470 Buchs (CH); MORIN, Kristian, 9470 Buchs (CH); HELMBERGER, Michael, 6700 Bludenz (AT)
(74) Vertreter: Hilti Aktiengesellschaft Corporate Intellectual Property
(86) Internationale Anmeldenummer: PCT/EP2021/079794
(87) Internationale Veröffentlichungsnummer: WO 2022/096337

(56) Entgegenhaltungen:
- US-A1- 2007 064 246
- US-A1- 2011 043 515
- US-A1- 2018 180 740
- US-A1- 2018 199 162
- US-A1- 2018 326 507

## Beschreibung

Die Erfindung betrifft ein Verfahren zur wiederholten Positionsmessung eines Baugeräts, beispielsweise einer mobilen Werkzeugmaschine, auf einer Baustelle. Bei zahlreichen, auf Baustellen verwendeten oder verwendbaren Geräten, beispielsweise bei Baurobotern, ist es erforderlich, die Position des Baugeräts innerhalb der Baustelle zu messen. Insbesondere sollte das Baugerät in der Lage sein, seine eigene Position auf der Baustelle zu messen.

Übliche Bautätigkeiten erfordern dazu vergleichsweise hohe Messgenauigkeiten, insbesondere sind Messgenauigkeiten im Bereich von 1 cm oder weniger, insbesondere im Bereich von 1 bis 10 mm, wünschenswert. US2018180740A1 offenbart ein Verfahren zur Bestimmung der Sensorposition und -ausrichtung unter Verwendung einer markerbasierten Lokalisierung, die eine Messung mit dieser Genauigkeit ermöglicht.

Soll sich das Baugerät beispielsweise auf der Baustelle fortbewegen, sind die Positionsmessungen zu wiederholen. Hohe Wiederholungsfrequenzen ermöglichen dabei besonders schnelle positionskontrollierte Fortbewegungen.

Der Erfindung liegt daher die Aufgabe zugrunde, ein Verfahren sowie Vorrichtungen anzubieten, die hochfrequente Positionsmessungen eines Baugeräts auf einer Baustelle erlauben.

Gelöst wird die Aufgabe durch ein Verfahren zur wiederholten Positionsmessung eines Baugeräts auf einer Baustelle, wobei die Position relativ zu wenigstens zwei, vorzugsweise wenigstens drei, Markierungen gemessen wird, umfassend die Schritte:
a. Direkte Messung der Distanzen ausgehend von einem am Baugerät angeordneten und / oder ausgebildeten Positionsmesssystem zu wenigstens zwei der Markierungen, vorzugsweise zu allen in einem Sichtfeld des Positionsmesssystems liegenden Markierungen, und Messung der Sichtwinkel, unter denen die wenigstens zwei der Markierungen vom Positionsmesssystem aus erscheinen, um eine erste Positionsmessung des Baugeräts durchzuführen, und
b. Anpeilen wenigstens zweier der Markierungen vom Positionsmesssystem aus, um eine zweite Positionsmessung des Baugeräts durchzuführen , wobei wenigstens eine Positionsbestimmung eines Bauelements der Baustelle, beispielsweise einer Gebäudewand, mittels eines mechanischen Kontaktes des Baugeräts) mit einem Oberflächenbereich des Bauelements erfolgt, wobei unter Berücksichtigung der Abmessungen und der Geometrie des Baugeräts eine Position des Oberflächenbereichs bestimmt wird

Das Baugerät kann beispielsweise eine, insbesondere mobile, Werkzeugmaschine, beispielsweise ein, bevorzugt mobiler, Bauroboter oder eine Handwerkzeugmaschine, sein. Das Baugerät kann zur Bearbeitung einer Decke, eines Bodens und / oder einer Wand der Baustelle eingerichtet sein. Es kann wenigstens eine Vorrichtung zum Bohren, Meißeln, allgemein Schlagen und / oder Sprühen aufweisen. Es kann ein Fahrwerk aufweisen. Alternativ oder ergänzend kann es eine Flug- und / oder Schwebevorrichtung zur fliegenden und /oder schwebenden Fortbewegung des Baugeräts aufweisen. Beispielsweise kann das Baugerät auch ein, vorzugsweise unbemanntes, fliegendes Objekt, beispielsweise eine Drohne, sein.

Das Baugerät kann auch selbst ein Positionsmesssystem und / oder ein Positionsmarkierungsgerät, beispielsweise einen Rotations-, einen Strich-, einen Punkt- und / oder einen Linienlaser aufweisend, sein.

Die Baustelle kann eine Hochbau-Baustelle oder eine Tiefbau-Baustelle sein.

Der Erfindung liegt dabei der Gedanke zugrunde, durch einen Wechsel der Messmethoden zur Positionsmessung zu höheren Wiederholfrequenzen gelangen zu können. Insbesondere wird ausgenutzt, dass durch eine direkte Distanzmessung in Verbindung mit Messungen der Sichtwinkel den Markierungen Referenzpositionen besonders präzise zugeordnet werden können. Diese erste Positionsmessung kann einmalig erfolgen. Um eine hohe Messgenauigkeit zu erreichen, können daher auch verhältnismäßig zeitaufwändige Messmethoden, beispielsweise Laufzeit-basierte Messmethoden, zur direkten Distanzmessung verwendet werden.

Anschließend kann durch Anpeilen der Markierungen unter Berücksichtigung der ermittelten Referenzpositionen eine vergleichsweise schnelle Messmethode, insbesondere für nachfolgende, wiederholte Positionsmessungen, verwendet werden. Dadurch lassen sich die nachfolgenden Positionsmessungen erheblich beschleunigen, sodass wiederholte, hochfrequente Positionsmessungen eines Baugeräts auf einer Baustelle möglich sind.

Unter einer direkten Distanzmessung kann eine Messung mittels eines Längenmessers verstanden werden, insbesondere eine Messung ohne Triangulation. Eine direkte Messung kann beispielsweise mechanisch, beispielsweise mittels eines Maßbandes oder dergleichen, oder optisch, beispielsweise mittels eines Lichtstrahls, erfolgen.

Zur Messung kann die zwischen zwei Messpunkten liegende Wegstrecke, beispielsweise mechanisch oder optisch, überbrückt werden. Beispielsweise kann die Laufzeit eines Lichtstrahls entlang der Wegstrecke oder der doppelten Wegstrecke, also sowohl eines Hin- als auch eines Rückweges entlang der Wegstrecke, gemessen werden.

Derartige direkte Messungen bieten den Vorteil, dass mit ihnen die zwischenliegende Wegstrecke unmittelbar, insbesondere ohne Kenntnis von Referenzpositionen oder Referenzstrecken oder dergleichen, ermittelbar ist. Sie sind in der Regel jedoch verhältnismäßig langsam und bieten daher lediglich geringe Wiederholfrequenzen. Je nach konkrete verwendetem Messverfahren kann auch ein vergleichsweise hoher Auswertungs- und / oder Rechenaufwand anfallen, der wiederum die erreichbaren Wiederholfrequenzen limitiert.

Unter Anpeilen kann ein Messverfahren verstanden werden, das lediglich Winkelmessungen unter Bezugnahme auf vorab bekannte Referenzstrecken oder Referenzpositionen benötigt.

Für Positionsmessungen auf Baustellen genügen oftmals zweidimensionale Messungen. Denkbar ist daher, lediglich zwei Markierungen zu messen bzw. zu verwenden. Zur Genauigkeitsverbesserung ist es jedoch auch denkbar, mehr als zwei Markierungen, beispielsweise drei, vier oder fünf Markierungen, zu verwenden. Werden mehr als zwei Markierungen verwendet, kann auch wenigstens eine dreidimensionale Positionsmessung erfolgen. Zur Genauigkeitsverbesserung können die Markierungen voneinander beabstandet, beispielsweise jeweils mindestens 1m voneinander beabstandet, sein.

Das Positionsmesssystem ist am Baugerät angeordnet und / oder ausgebildet; es kann somit mit dem Baugerät mitbewegt werden. Die Position kann vom Baugerät und insbesondere nicht von einem etwaigen Drittgerät, beispielsweise einer separat aufgestellten automatischen Totalstation, aus bestimmt werden. Ein dauerhafter Sichtkontakt zu einem solchen Drittgerät, der insbesondere auf Baustellen oftmals nur schwer aufrecht zu erhalten ist, ist nicht erforderlich.

Die direkte Messung der Distanzen kann zum Beispiel mittels eines Laserdistanzmessers oder einer Time-Of-Flight (TOF-)-Kamera erfolgen. Die direkten Messungen der Distanzen können auch mittels einer Kamera, beispielsweise unter Verwendung eines Simultaneous-Localizationand-Mapping (SLAM)-Algorithmus, erfolgen.

Zur berührungslosen Messung der Distanzen und / oder zur Messung von wenigstens einem der Winkel kann ein elektromagnetischer Strahl, insbesondere ein Laserstrahl, bevorzugt vom Positionsmesssystem aus, ausgestrahlt werden. Der elektromagnetische Strahl kann ein Mikrowellenstrahl, ein Radarstrahl, ein Infrarotstrahl, ein Lichtstrahl aus dem sichtbaren Spektrum, ein UV-Lichtstrahl oder dergleichen sein. Zur Messung kann ein Strahldistanzmesser, beispielsweise ein Laserdistanzmesser, verwendet werden.

Der Laserdistanzmesser kann ein LIDAR, englisch für "light detection and ranging", sein und / oder umfassen. Das LIDAR kann am Positionsmesssystem ausgebildet und / oder angeordnet sein.

Wird bei der Messung der Distanzen und / oder der Sichtwinkel und / oder beim Anpeilen ein Intensitätssensor zur Messung einer Intensität einer Reflexion des Strahls verwendet, lassen sich auf besonders kostengünstige Weise auch Zeitreihen aufzeichnen. Allgemein können Intensitätssensoren vergleichsweise kostengünstig messen und dennoch eine hohe zeitliche Auflösung bei gleichzeitig hoher geometrischer Auflösung aufweisen. Durch Auswertung einer solchen Zeitreihe kann auch wenigstens eine der Markierungen identifiziert werden.

Zur weiteren Steigerung der Messgenauigkeit können eine Inertialmesseinheit (IMU, englisch für "inertial measurement unit"), und / oder einen Winkelencoder verwendet werden. Dies empfiehlt sich insbesondere bei der Messung der Sichtwinkel und / oder beim Anpeilen.

Der Winkelencoder kann beispielsweise eine jeweilige Strahlrichtung des Strahls erfassen. Die Inertialmesseinheit kann eingerichtet sein, Beschleunigungskräfte, beispielsweise die Schwerkraft, des Baugeräts und / oder des Positionsmesssystems zu erfassen. Diese Zusatzinformationen können für eine Vorausrechnung zu erwartender Positionsinformationen und / oder zur Feststellung einer Lage und / oder Ausrichtung des Baugeräts verwendet werden.

Wird der Strahl in einer horizontalen oder zumindest im Wesentlichen horizontalen Ebene, vorzugsweise um 360°, rotiert, so kann mithilfe eines einzigen Strahls das Sichtfeld rund um das Positionsmesssystem bzw. um das Baugerät erfasst werden. Somit lassen sich Möglichkeiten für die Platzierung der Markierungen, insbesondere innerhalb des Sichtfelds des Positionsmesssystems, erweitern. Ebenso lässt sich der Bereich erweitern, innerhalb dessen das Baugerät platziert werden kann, sodass die Position des Baugeräts mit dem Positionsmesssystem bestimmbar ist oder bleibt.

Eine Variante des erfindungsgemäßen Verfahrens kann einen Suchschritt umfassen, in dem die wenigstens zwei Markierungen innerhalb der Baustelle durch das Positionsmesssystem, insbesondere mithilfe des Intensitätssensors, gesucht werden. Die Suche kann dadurch erfolgen, dass der Strahl, insbesondere um 360°, rotiert wird, wobei die Intensitäten von Reflexionen des Strahls gemessen werden. Denkbar ist insbesondere, Markierungen anhand ihrer Reflexionseigenschaften in Bezug auf den Strahl zu detektieren. Zur Suche kann der Strahl in einer horizontalen oder zumindest im Wesentlichen horizontalen Ebene rotiert werden. Denkbar ist, insbesondere wenn während einer Umrundung des Strahls keine Markierung detektiert werden kann, die Höhenlage der Ebene zu variieren. Dazu kann eine vertikale Auslenkung des Strahls, beispielsweise mittels einer Vertikalablenkeinheit, erfolgen. Das Ausmaß der vertikalen Ablenkung kann variiert werden, sodass sich das gesuchte Suchfeld über ein vertikal sich erstreckendes Band ausdehnt.

Denkbar ist, dass die hierzu verwendeten Markierungen charakteristische Reflexionseigenschaften, insbesondere charakteristische Reflexionsmuster, aufweisen.

Beispielsweise können sie einen Markierungsflächenbereich mit einem Streifenmuster aufweisen.

Vorzugsweise kann wenigstens eine der Markierungen mindestens 30 cm hoch sein. Somit lassen sich die Anforderungen an die Stellgenauigkeit der Vertikalablenkeinheit reduzieren und die Höhenlagen, auf denen die Markierungen angeordnet sind, brauchen nicht übereinstimmen.

In den Rahmen der Erfindung fällt des Weiteren ein Positionsmesssystem, eingerichtet zur Ausführung des erfindungsgemäßen Verfahrens, umfassend eine Distanzdirektmesseinheit zur direkten Messung einer Distanz zwischen dem Positionsmesssystem und einer Markierung, einer Sichtwinkelmesseinheit zur Messung eines Sichtwinkels, unter dem die Markierung vom Positionsmesssystem aus erscheint, sowie eine Anpeileinheit zum Anpeilen der Markierung. Ein solches Positionsmesssystem ermöglicht die Nutzung der verfahrensgemäßen Vorteile, insbesondere erlaubt es mehrfache Positionsmessungen des Baugeräts bei verhältnismäßig hoher Wiederholfrequenz. Dabei können ein oder mehrere der Einheiten als einheitliches Element ausgebildet sein und / oder Teil einer anderen der Einheiten sein. Denkbar ist auch, dass wenigstens zwei der Einheiten einzelne ihrer Elemente gemeinsam nutzen. Beispielsweise kann die Distanzmesseinheit ein LIDAR sein und eine Laserstrahlquelle sowie eine Horizontalablenkeinheit umfassen. Die Laserstrahlquelle und / oder die Horizontalablenkeinheit können von der Anpeileinheit mitnutzbar und / oder auch Teil der Anpeileinheit sein.

Denkbar ist auch, dass die Anpeileinheit ein Kamerasystem aufweist. Das Kamerasystem kann zur optischen Bildverarbeitung eingerichtet sein. Insbesondere kann es eingerichtet sein, in einem vom Kamerasystem aufgenommenen Bild die Markierung zu erkennen und / oder einen Winkel, beispielsweise relativ zu einem internen, insbesondere auf das Positionsmesssystem und / oder das Baugerät bezogenen körpereigenen, Koordinatensystem, zu bestimmen, unter dem die Markierung vom Positionsmesssystem aus gesehen erscheint.

Bei einer Variante des Verfahrens als auch für ein eigenständiges Verfahren zur Positionsmessung eines als mobile Werkzeugmaschine ausgebildeten Baugeräts kann vorgesehen sein, dass wenigstens eine Positionsbestimmung mittels eines mechanischen Kontaktes mit einem Oberflächenbereich eines Bauelements der Baustelle erfolgt. Das eigenständige Verfahren kann auch ein oder mehrere der vorangehend oder nachfolgend beschriebenen Merkmale aufweisen.

Das Bauelement kann ein Betonelement, beispielsweise aus armiertem Beton, sein. Alternativ kann es auch ein Bauelement aus Metall sein. Weitere Materialien sind ebenso denkbar. Das Bauelement kann eine Wand, ein Boden und / oder eine Decke sein und / oder umfassen.

Häufig sind auszuführende Bauarbeiten in einem BIM (Building Information Model)-Modell hinterlegt. Ein solches BIM-Modell kann in Form von CAD-Daten, Baubeschreibungen, Datenlisten, Zeichnungen und / oder anderen Formen von Planungsdaten ausgebildet sein.

Den Bauarbeiten sind Positionen im BIM-Modell zugeordnet, denen reale Positionen auf der Baustelle zugeordnet werden müssen, um die jeweiligen Bauarbeiten an der jeweils geeigneten Position zu realisieren. Häufig bestehen jedoch Abweichungen zwischen einer Planung gemäß dem BIM-Modell und der tatsächlichen Position von bereits errichteten Bauelementen oder dergleichen.

Infolge einer solchen Abweichung sind dann oftmals auch andere Bauarbeiten anzupassen. Beispielsweise sollte in der Regel die Position einer Bohrung einer Wand relativ zur Position der Wand und / oder relativ zu einer anderen Position, beispielsweise einer anderen Bohrung, der Wand, bestimmt werden. Dies selbst dann, wenn die Wand insgesamt mehr oder weniger abweichend von der Planung gemäß BIM-Modell relativ zu einem Ausgangspunkt der Baustelle und / oder relativ zu einem Baustellen-bezogenen Koordinatensystem versetzt angeordnet ist.

Um somit derartige Abweichungen zu kompensieren, kann eine tatsächliche Position mittels des mechanischen Kontakts ermittelt werden. Die relative Position dieses mechanischen Kontakts zu den wenigstens zwei Markierungen kann ermittelt werden. Beispielsweise können die Abstände zwischen dem mechanischen Kontakt und den wenigstens zwei Markierungen ermittelt werden. Allgemein kann eine Abweichung der Position des mechanischen Kontakts relativ zu den wenigstens zwei Markierungen und entsprechend geplanter Positionen gemäß dem BIM-Modell ermittelt werden. Nachfolgende Positionsbestimmungen können um die ermittelte Abweichung korrigiert werden.

Der mechanische Kontakt kann zwischen dem Baugerät und dem Oberflächenbereich bestehen. Dazu kann das Baugerät einen Manipulator aufweisen. Der Manipulator kann in Form eines Arms, insbesondere eines mehrachsigen Arms, beispielsweise mit mindestens drei und vorzugsweise mindestens sechs Freiheitsgraden, ausgebildet sein. Er kann einen Endeffektor aufweisen. Der Endeffektor kann eine Werkzeugmaschinenaufnahme, insbesondere zur Aufnahme einer elektrischen Werkzeugmaschine und / oder eines Messsensors, aufweisen. Der mechanische Kontakt kann dann direkt und / oder indirekt zwischen dem Manipulator und dem Oberflächenbereich erfolgen. Dazu kann der mechanische Kontakt beispielsweise zwischen einem in der Werkzeugmaschinenaufnahme aufgenommenen Gerät und dem Oberflächenbereich bestehen und / oder von dem Gerät und / oder dem Baugerät detektiert werden.

Die Position des mechanischen Kontakts kann der Position einer, insbesondere erfolgten und / oder zu erfolgenden, Oberflächenbearbeitung des Oberflächenbereiches entsprechen.

Die Oberflächenbearbeitung kann beispielsweise Bohren, Schneiden, Meißeln, Schleifen und / oder Umformen sein und / oder umfassen. Sie kann auch eine Erstellung des Oberflächenbereiches, beispielsweise durch Gießen und / oder Stapeln von Baumaterial, umfassen.

Somit ist beispielhaft denkbar, an einer Position das Bauelement, beispielsweise eine Wand, eine Decke und / oder ein Boden, mechanisch zu kontaktieren. Beispielsweise kann an der Position eine Bohrung in das Bauelement gebohrt werden. Dann kann diese Position als tatsächliche Position der Bohrung zur Bestimmung weiterer Positionen verwendet werden.

Insbesondere kann eine Abweichung der tatsächlichen Position von einer Soll-Position gemäß dem BIM-Modell ermittelt werden.

Der mechanische Kontakt kann auch dadurch zustande kommen, dass sich das Baugerät, dessen Position gemessen werden soll, auf der Baustelle in mechanischen Kontakt mit dem Bauelement gerät, beispielsweise während einer Bewegung des Baugeräts. Zur Detektion eines solches mechanischen Kontakts weisst das Baugerät einen Berührungssensor auf.

Denkbar ist auch, dass das Baugerät an ein oder mehreren Testpositionen auf der Baustelle Bauelemente der Baustelle mechanisch kontaktiert. Insbesondere ist denkbar, die eine oder die mehreren Testpositionen mit dem Baugerät jeweils bis zum Vorliegen eines mechanischen Kontakts anzufahren. Es können dann beispielswiese jeweils Abweichungen und / oder Übereinstimmungen mit dem BIM-Modell erfasst werden.

Somit ergeben sich auch ein zusätzliches Verfahrensmerkmal sowie ein Verfahren zur Qualitätskontrolle einer Baustelle, bei dem wenigstens eine Testposition, vorzugsweise mehrere Testpositionen, der Baustelle von dem Baugerät angefahren werden und ein mechanischer Kontakt zu einem die jeweilige Testposition umfassenden Oberflächenbereich eines Bauelements der Baustelle hergestellt wird. Weiter kann die jeweilige Position des jeweiligen mechanischen Kontakts bestimmt werden, beispielsweise nach einem der vorangehend oder nachfolgend beschriebenen Verfahren. Die jeweils bestimmte Position kann mit einer korrespondieren Position gemäß einem BIM-Modell verglichen werden. Abweichungen und / oder Übereinstimmungen zwischen der jeweils bestimmten Position undh der korrespondierenden Position können ermittelt werden.

Ein weiteres Verfahrensmerkmal sowie ein weiteres Verfahren ergeben sich ferner auch dadurch, dass eine Position auf einer Baustelle bestimmt wird, in dem ein mechanischer Kontakt mit einem Oberflächenbereich detektiert und / oder hergestellt wird und wobei wenigstens ein weiteres Sensorsignal zur Positionsbestimmung der Position auf der Baustelle verwendet wird. Das weitere Sensorsignal kann beispielsweise einem mittels Laserstrahl ermittelten Distanzwertes und / oder einer Peilung entsprechen. Mehrere aus diesen Messungen resultierende Messwerte für die Position auf der Baustelle können zueinander abgeglichen werden. Der Abgleich kann beispielsweise mithilfe eines Kalman-Filters erfolgen.

Auch fällt in den Rahmen der Erfindung ein Positionsmesssystem zur wiederholten Positionsmessung eines Baugeräts, an dem das Positionsmesssystem anordenbar, ausbildbar, angeordnet und / oder ausgebildet ist, auf einer Baustelle, beispielsweise auf einer Hochbau-Baustelle oder auf einer Tiefbau-Baustelle, wobei die Position relativ zu wenigstens zwei, vorzugsweise wenigstens drei, Markierungen messbar ist, umfassend eine Strahlquelle zur Erzeugung eines elektromagnetischen Strahls, eine Horizontalablenkeinheit zur Ablenkung des Strahls in einer horizontalen oder in einer zumindest im Wesentlichen horizontalen Ebene, einen Strahlendistanzmesser, und einen Intensitätssensor zur Messung einer Intensität einer Reflexion des durch die Strahlquelle erzeugten Strahls. Auch ein solches Positionsmesssystem kann zur Ausführung des erfindungsgemäßen Verfahrens eingerichtet sein.

Die beiden Varianten von Positionsmesssystem können ein oder mehrere der gegenständlichen, im Zusammenhang mit dem Verfahren beschriebenen Merkmale aufweisen. Beispielsweise kann die Strahlquelle ein Laser sein. Insbesondere kann das Positionsmesssystem ein LIDAR aufweisen. Das Positionsmesssystem kann auch eine Vertikalablenkeinheit aufweisen. Das Positionsmesssystem kann auch einen Winkelencoder aufweisen. Die Strahlquelle kann einen Teil des Strahlendistanzmessers bilden.

Bei einer weiteren, besonders bevorzugten Ausführungsform der Erfindung weist das Positionsmesssystem einen Nullpunktdurchlaufsensor auf. Der Nullpunktdurchlaufsensor kann eingerichtet sein, einen Nullpunktdurchgang des Strahls während seiner Rotation zu detektieren. Er kann damit als Sensor zur Erfassung der Umlauffrequenz des Strahls eingerichtet sein.

Die Zeitdauer seit dem jeweils letzten Nullpunktdurchlauf kann ein Nullpunkt eines internen Koordinatensystems oder zumindest einer Achse des internen Koordinatensystems sein.

Besonders bevorzugt weist das Positionsmesssystem ein Kamerasystem auf. Das Kamerasystem kann eingerichtet sein, zeitgleich, im Wesentlichen zeitgleich oder zeitversetzt zu ersten und / oder zweiten Positionsmessungen dritte Positionsmessungen zu messen. Dazu kann beispielsweise ein SLAM-Algorithmus in dem Kamerasystem und / oder in einem mit dem Kamerasystem verbundenen Rechnersystem implementierbar und / oder implementiert sein.

Des Weiteren stellt die Erfindung ein mobiles Baugerät für eine Baustelle, insbesondere für eine Hochbau-Baustelle und / oder eine Tiefbau-Baustelle, beispielsweise ein Bauroboter, eine Handwerkzeugmaschine oder ein Baumessgerät, mit einem erfindungsgemäßen Positionsmesssystem bereit. Das mobile Baugerät kann wenigstens eines der vorangehend beschriebenen Baugeräte aufweisen und / oder sein.

Des Weiteren stellt die Erfindung eine Markierung zur Verwendung in einem erfindungsgemäßen Verfahren und / oder zur Verwendung mit einem erfindungsgemäßen Positionsmesssystem bereit.

Die Markierung umfasst einen Messflächenbereich, der eingerichtet ist, einen elektromagnetischen Strahl des Positionsmesssystems zu reflektieren. Die Reflexion kann matt oder glänzend sein. Der Reflexionsgrad kann im Bereich des Messflächenbereichs höher als der von Oberflächen, insbesondere aller Oberflächen, außerhalb des Messflächenbereichs sein. Insbesondere kann der Messflächenbereich einen grauen, insbesondere hellgrauen, oder einen weißen Farbton aufweisen. Ein solcher Farbton kann einen verhältnismäßig hohen Anteil eingestreuten Lichts diffus reflektieren. Denkbar ist auch, dass der Messflächenbereich eine spiegelnde Oberfläche aufweist.

Besonders bevorzugt kann die Markierung wenigstens einen Markierungsflächenbereich aufweisen. Der Markierungsflächenbereich kann vom Messflächenbereich verschieden sein. Der Markierungsflächenbereich kann ein Streifenmuster aufweisen. Innerhalb des Streifenmusters kann der Reflexionsgrad variieren. Das Streifenmuster kann, zumindest gemäß einer üblichen Verwendungsrichtung der Markierung, vertikal oder zumindest im Wesentlichen vertikal verlaufend ausgebildet sein. Es kann mehrere Markierungsflächenbereiche, insbesondere gemäß der üblichen Verwendungsrichtung der Markierung einen oberen und einen unteren Markierungsflächenbereich, geben.

Die Markierung kann somit ein sandwichartiges Muster aufweisen. Der Messflächenbereich und / oder der Markierungsflächenbereich können ein Streifenmuster mit vertikal variierender Streifendichte und / oder Streifenbreite aufweisen. Hierdurch lässt sich die Identifikation von Markierungen erleichtern. Je nach Ausgestaltung der Markierung, insbesondere des Markierungsflächenbereichs und des Messflächenbereichs, lassen sich auch Informationen zum Bereich oder Punkt, in dem der Strahl auf die Markierung auftrifft, aus der Intensität des reflektierten Lichts des Strahles ableiten.

Eine besonders bevorzugte Ausführungsform der Markierung ist zylinderförmig ausgebildet.

Dadurch kann die Markierung aus besonders vielen Richtungen aus erkannt und verwendet werden.

Die Höhe der Markierung kann größer als ihre Breite, insbesondere als ein größter Durchmesser, der Markierung sein. Dabei können die Höhe und die Breite gemäß der üblichen Verwendungsrichtung der Markierung gemessen sein.

Beispielsweise kann die Markierung mindestens 30 cm hoch sein. Besonders bevorzugt kann der Messflächenbereich eine Höhe von mindestens 10 cm aufweisen. Hierdurch lassen sich die Anforderungen an die Stellgenauigkeit der Vertikalablenkeinheit reduzieren und die Höhenlagen, auf denen die Markierungen angeordnet sind, brauchen nicht übereinstimmen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- **Fig. 1**: eine schematische Ansicht auf eine Baustelle von oben mit einem auf einem Baugerät angeordneten Positionsmesssystem;
- **Fig. 2**: eine schematische Darstellung des Positionsmesssystems;
- **Fig. 3**: eine schematische Darstellung einer Markierung sowie abgerollte Darstellungen von Oberflächenbereichen der Markierung;
- **Fig. 4**: ein Flussdiagramm des Verfahrens und
- **Fig. 5**: eine schematische Ansicht auf die Baustelle gemäß Fig. 1, wobei das Baugerät eine Gebäudewand mechanisch kontaktiert.

In der nachfolgenden Beschreibung der Figuren werden zur Erleichterung des Verständnisses der Erfindung für gleiche oder sich funktional entsprechende Elemente jeweils die gleichen Bezugszeichen verwendet.

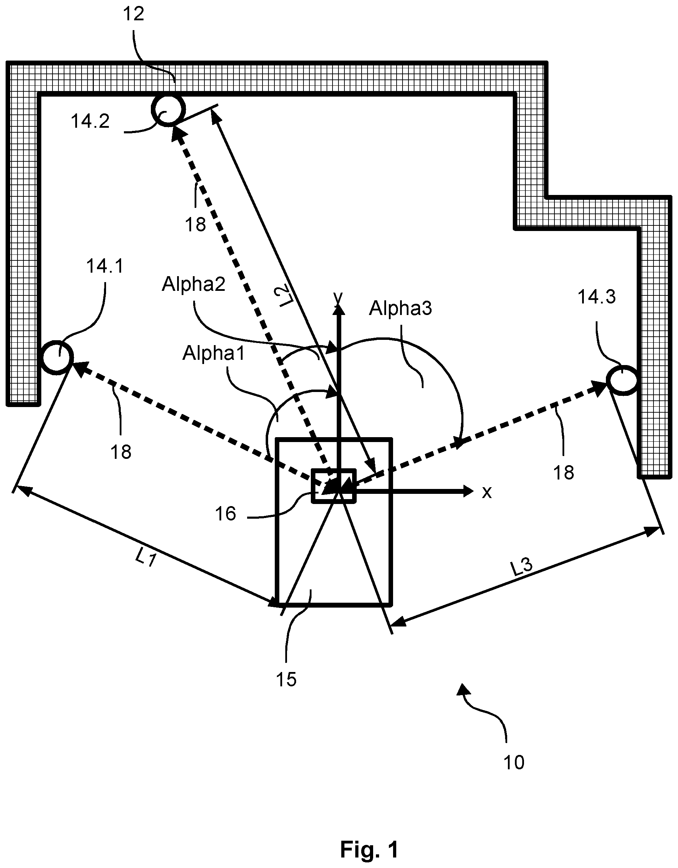

**Fig. 1** zeigt eine Hochbau-Baustelle **10** mit einer Gebäudewand **12.** An der Gebäudewand 12 sind drei Markierungen **14.1, 14.2** und **14.3** angeordnet.

Auf der Hochbaubau-Baustelle 10 befindet sich ein Baugerät **15,** auf dem ein Positionsmesssystem **16** angeordnet ist. Das Baugerät 15 ist ein mobiler Bauroboter. Der mobile Bauroboter kann zur Bearbeitung von Böden, Decken und / oder Wänden, insbesondere zur Bearbeitung der Gebäudewand 12, eingerichtet sein. Insbesondere kann er zum Bohren und / oder Meißeln ausgebildet sein.

Vom Positionsmesssystem 16 wird ein Laserstrahl **18** ausgestrahlt. Das Positionsmesssystem 16 rotiert den Laserstrahl 18 in einer horizontalen Ebene insgesamt um 360° auf Höhe der Markierungen 14.1, 14.2 und 14.3.

In Fig. 1 sind drei Situationen dargestellt, in denen der Laserstrahl 18 jeweils eine der Markierungen 14.1, 14.2 14.3 während seiner Rotation trifft. In diesen Situationen bestimmt das Positionsmesssystem 16 die Distanzen zwischen dem Positionsmesssystem 16 und den Markierungen 14.1, 14.2 und 14.3 als Distanzen **L1, L2** und **L3.** Zudem misst das Positionsmesssystem 16 relativ zu einem internen, körpereigenen Koordinatensystem mit den Achsen X und Y jeweils Sichtwinkel **Alpha1, Alpha2** und **Alpha3,** unter denen die Markierungen 14.1,14.2 und 14.3 jeweils ausgehend vom Positionsmesssystem 16 sichtbar sind.

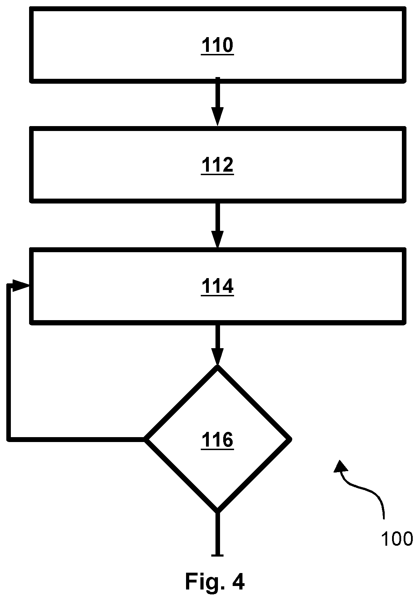

Wie noch im Zusammenhang mit Fig. 4 näher ausgeführt wird, stellt somit Fig. 1 Situationen dar, in der das Positionsmesssystem 16 gemäß dem Schritt a des erfindungsgemäßen Verfahrens Messungen der Distanzen L1, L2 und L3 und der Sichtwinkel Alpha1, Alpha2 und Alpha3 vornimmt.

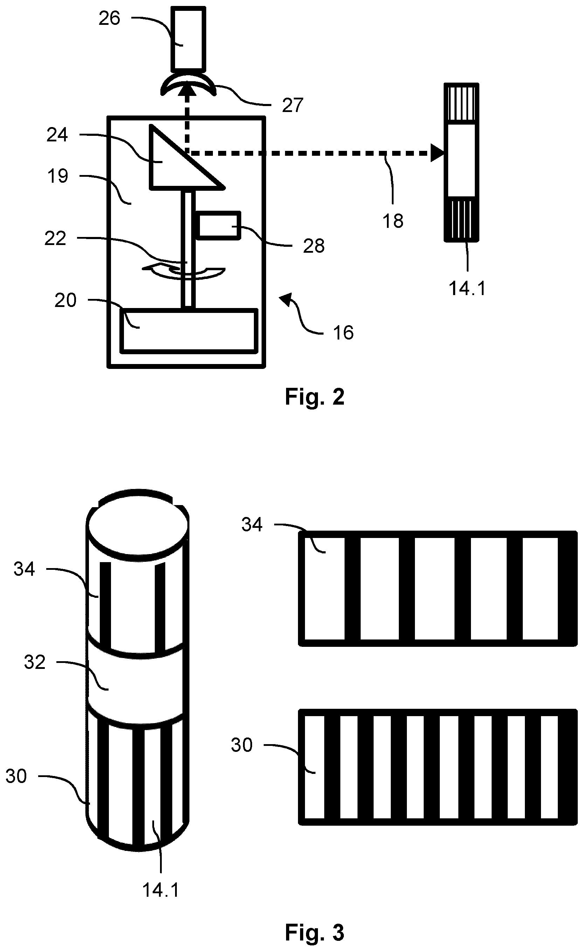

**Fig. 2** zeigt in schematischer Weise den Aufbau des Positionsmesssystems 16.

Es weist eine Horizontalablenkeinheit **19** mit einem Motor **20,** beispielsweise ein Spindelmotor, auf, einer Spindel **22,** einem Prismenspiegel **24** und einem Winkelencoder **28** auf. Der Motor 20 setzt die Spindel 22 in Rotation. Auf der Spindel 22 ist der Prismenspiegel 24 angeordnet. Der Prismenspiegel 24 rotiert somit mit der Spindel 22, angetrieben durch den Motor 20, mit. Er lenkt einen Laserstrahl 18, der von einer Strahlquelle **26** erzeugt und ausgestrahlt wird, in einer horizontalen Ebene ab.

Der Prismenspiegel 24 ist vertikal verstellbar. Insbesondere kann je nach Stellung des Prismenspiegels 24 der Laserstrahl 18 unterschiedliche weit vertikal abgelenkt werden. Er bildet somit eine Vertikalablenkeinheit für den Laserstrahl 18.

Eine Sensoreinheit **27** weist einen Intensitätssensor zur Erfassung von Intensitäten reflektierten Lichts des Laserstrahls 18 sowie einen Strahlendistanzmesser in Form einer Laufzeitmesseinheit zur Erfassung einer Hin- und Rücklaufzeit des Laserstrahls 18 auf. Insbesondere bilden die Strahlquelle 26, der Strahlendistanzmesser und die Horizontalablenkeinheit 19 ein LIDAR.

Der von der Strahlquelle 26 erzeugte Laserstrahl 18 trifft gemäß der in Fig. 1 dargestellten Situationen auf die Markierungen 14.1 bzw. 14.2 (Fig. 1) bzw. 14.3 (Fig. 1) auf und wird von der jeweiligen Markierung 14.1, 14.2 oder 14.3 auf den Prismenspiegel 24 und sodann auf die Sensoreinheit 27 zurückreflektiert. Beispielhaft ist dazu in Fig. 2 die Markierung 14.1 in einer schematischen Seitenansicht abgebildet.

Die Sensoreinheit 27 erfasst die Intensität des zurückreflektierten Lichts als auch die gesamte Laufzeit und damit die gesamte, zurückgelegte Wegstrecke des Laserstrahls 18.

Es versteht sich, dass die Sensoreinheit 27 auch derart ansteuerbar und nutzbar ist, dass lediglich eine der beiden Messgrößen erfasst wird. Insbesondere kann die Sensoreinheit 27 ausgebildet sein, lediglich die Intensität des zurückgestreuten Lichts zu erfassen.

Der Winkelencoder 28 ist eingerichtet, einen Drehwinkel der Spindel 22 und damit des Prismenspiegels 24 und wiederum damit der Strahlrichtung des Laserstrahls 18 zu erfassen. Als Nullpunkt des erfassten Winkels ist dabei die Richtung der Achse Y (Fig. 1) gewählt.

Der Strahlendistanzmesser bildet eine Distanzdirektmesseinheit. Eine Sichtwinkelmesseinheit sowie eine Anpeileinheit sind durch die Strahlquelle 26, die Sensoreinheit 27, die Horizontalablenkeinheit 19 und dem Winkelencoder 28 ausgebildet.

**Fig. 3** zeigt die Markierung 14.1. Die Markierungen 14.2 und 14.3 (beide Fig. 1) sind identisch zur Markierung 14.1 ausgebildet.

Auf der linken Seite der Fig. 3 ist in einer perspektivischen Ansicht zu erkennen, dass die Markierung 14.1 zylinderförmig ausgebildet ist. Sie weist drei Teilbereiche an ihrer Umfangs-Außenseite auf. Insbesondere weist sie einen unteren Markierungsflächenbereich **30** sowie einen oberen Markierungsflächenbereich **34** auf, die einen dazwischen befindlichen Messflächenbereich **32** sandwichartig von oben und unten einschließen.

Wie insbesondere auch anhand der rechten Hälfte der Darstellung gemäß Fig. 3 erkennbar ist, die abgerollte Darstellungen der Teilbereiche zeigt, weisen der obere Markierungsflächenbereich 34 sowie der untere Markierungsflächenbereich 30 jeweils ein Streifenmuster auf. Die Streifenmuster weisen gemäß der üblichen Verwendungsrichtung der Markierung 14.1 vertikal verlaufende Streifen auf. Zu erkennen ist insbesondere, dass die Streifen des Streifenmuster der Markierungsfläche 30 enger gewählt sind als die Streifen des Markierungsflächenbereichs 34.

Überstreicht somit der Laserstrahl 18 (Fig. 1) die Markierung 14.1 im Bereich der oberen Markierungsfläche 34, so weist der zeitliche Intensitätsverlauf des zurückreflektierten Lichts des Laserstrahls 18 einen niederfrequente Rhythmus auf, wohingegen im Falle, dass der Laserstrahl 18 den unteren Markierungsflächenbereich 30 überstreicht, einen höherfrequenten Rhythmus des Intensitätsverlaufs messbar ist. Die beim Überstreichen detektierten Hell-Dunkel-Kontraste sind in ihrer Amplitude sowie in ihren Rhythmen dabei derart gewählt, dass eine Unterscheidung der Markierung 14.1 gegenüber anderer Oberflächen der Baustelle 10 (Fig. 1) mit hinreichender Sicherheit möglich ist.

Überstreicht dagegen der Laserstrahl 18 den Messflächenbereich 32, so wird Licht mit einer verhältnismäßig hohen Intensität, jedoch ohne einer rhythmischen Modulation, zurückreflektiert und kann dadurch detektiert werden. Die Detektion lässt sich noch hinsichtlich ihrer räumlichen Auflösung verbessern, in dem zur Lokalisierung der Markierung 14.1 beispielsweise ein Intensitätsmaximum des reflektierten Lichts ermittelt wird.

Anhand von **Fig. 4** soll nun das erfindungsgemäße Verfahren anhand eines Verfahrens **100** erläutert werden.

Zur Erleichterung des Verständnisses des Verfahrens 100 wird zur Beschreibung von Elementen des Positionsmesssystems sowie anderer der vorangehend beschriebenen Elemente auf die vorangehenden eingeführten Bezugszeichen zurückgegriffen.

In einem Suchschritt **110** werden zunächst gemäß dem oben genannten Suchschritt des Verfahrens die Markierungen 14.1,14.2 und 14.3 innerhalb der Baustelle 10 gesucht bzw. lokalisiert.

Dazu wird der Laserstrahl 18 in Rotation versetzt und mittels des Prismenspiegels 24 vertikal abgelenkt. Die vertikale Ablenkung kann in Stufen, insbesondere in verhältnismäßig groben, der Höhe der Markierungen 14.1,14.2 und 14.3 entsprechenden, Stufen erfolgen.

Trifft dabei der Laserstrahl 18 auf eine der Markierungen 14.1,14.2 und 14.3, so kann seine vertikale Ablenkung feinjustiert werden. Dazu kann anhand der Frequenz des zurückreflektierten Lichts darauf geschlossen werden, in welchem der Teilbereiche der Laserstrahl 18 auftrifft. Je nachdem, ob er beispielsweise auf die obere oder die untere Markierungsfläche 30 bzw. 34 auftrifft, wird der Strahl mittels des Prismenspiegels 24 weiter nach oben oder weiter nach unten abgelenkt, bis er letzten Endes auf die Messflächenbereiche 32 der Markierungen 14.1,14.2 und 14.3 auftrifft.

Für eine erste Positionsmessung werden in einem Schritt a des Verfahrens, in Fig. 4 in einem Schritt **112** abgebildet, mittels der Sensoreinheit 27 die Distanzen L1, L2 und L3 sowie die Sichtwinkel Alpha1, Alpha2 und Alpha3 gemessen. Insbesondere werden die Sichtwinkel Alph1, Alpha2 und Alpha3 relativ zum körpereigenen Koordinatensystem mit den Achsen X und Y gemessen. Dabei ist die Achse Y, die einer üblichen Vorwärtsrichtung des Baugeräts 15 entspricht, als Nulldurchgangsrichtung definiert.

Die Messung der Distanzen L1, L2 und L3 erfolgen durch Laufzeitmessung, d. h. TOF-Messung, der Laufzeit des Laserstrahls 18 von der Sensoreinheit 27 zu den jeweiligen Markierungen 14.1,14.2 bzw. 14.3 und zurück zur Sensoreinheit 27.

Die Winkelmessungen erfolgen mithilfe des Winkelencoders 28, wobei jeweils der Winkel als Sichtwinkel Alpha1, Alpha2 bzw. Alpha3 gewertet wird, den der Laserstrahl 18 im jeweiligen Intensitätsmaximum des zurückreflektierten Lichts annimmt.

Aus den gewonnenen Daten können auch Distanzen und relativen Positionen der Markierungen 14.1, 14.2 und 14.3 zueinander ermittelt werden.

Diese erste Positionsmessung erfolgt in der Regel einmalig innerhalb einer Folge mehrerer Positionsmessungen.

Weitere Positionsmessungen erfolgen anschließend gemäß dem im folgenden beschriebenen Schritt b des Verfahrens 100, der gemäß Fig. 4 von einem Schritt **114** umfasst ist.

Diese zweiten Positionsmessungen können wiederholt durchgeführt werden, insbesondere, wenn das Baugerät 15 auf der Baustelle 10 von einem Ort zu einem anderen Ort fortbewegt wird.

Diese zweiten Positionsmessungen erfolgen mittels Anpeilen der Markierungen 14.1,14.2 und 14.3.

Dazu wird wiederum der Laserstrahl 18, insbesondere um 360°, ausgehend vom Positionsmesssystem 16 rotiert.

Anhand der Intensitätsmaxima des zurückreflektierten Lichts und mithilfe des Winkelencoders 28 werden jeweils die Winkel erfasst, unter denen die Markierungen 14.1,14.42.3 jeweils vom Positionsmesssystem 16 aus erscheinen.

Unter der Annahme, dass die Markierungen 14.1,14.2 und 14.3 auf der Baustelle 10 ortsfest angeordnet sind, lässt sich somit jeweils die Position des Positionsmesssystems 16 und damit des Baugeräts 15 durch Triangulation ermitteln.

Vorzugsweise wird die Rotationsgeschwindigkeit des Laserstrahls 18 bei diesen zweiten Positionsmessungen im Vergleich zu den Positionsbestimmungen gemäß dem Schritt a bzw. 112, beispielsweise auf die doppelte Rotationsgeschwindigkeit, erhöht.

Alternativ zur Rotation des Laserstrahls 18 ist auch denkbar, den Laserstrahl 18 lediglich innerhalb eines Korridors, insbesondere eines Kreissektors, zu lenken. Denkbar ist auch, mehrere Laserstrahlen, insbesondere beispielsweise durch mehr als eine Strahlquelle erzeugt, zu verwenden. Auch ist eine Alternative denkbar, bei der der Laserstrahl 18 auf unterschiedliche Bereiche bzw. Kreissektoren umgeschaltet wird. Die Umschaltung kann beispielsweise ebenfalls mithilfe des Prismenspiegels 24 und / oder einer schaltbaren Flüssigkristallschicht erfolgen.

In einem Abschlussschritt **116** wird sodann überprüft, ob weitere Positionsmessungen vorzunehmen sind. Beispielsweise kann hierzu überprüft werden, ob das Baugerät 15 zur Ruhe gelangt ist oder seine Bewegung weiter fortsetzt. Im Falle weiterer Positionsmessungen wird erneut der Schritt 114 des Verfahrens 100 wiederholt, sodass weitere zweite Positionsmessungen durchgeführt werden.

Anderenfalls wird das Verfahren 100 beendet.

Es versteht sich, dass nach jeweils einer oder mehrerer Positionsmessung das jeweilige Messergebnis an eine weitere Einheit, insbesondere an eine weitere Einheit des Baugeräts 15 zur weiteren Verwendung weitergeleitet werden kann.

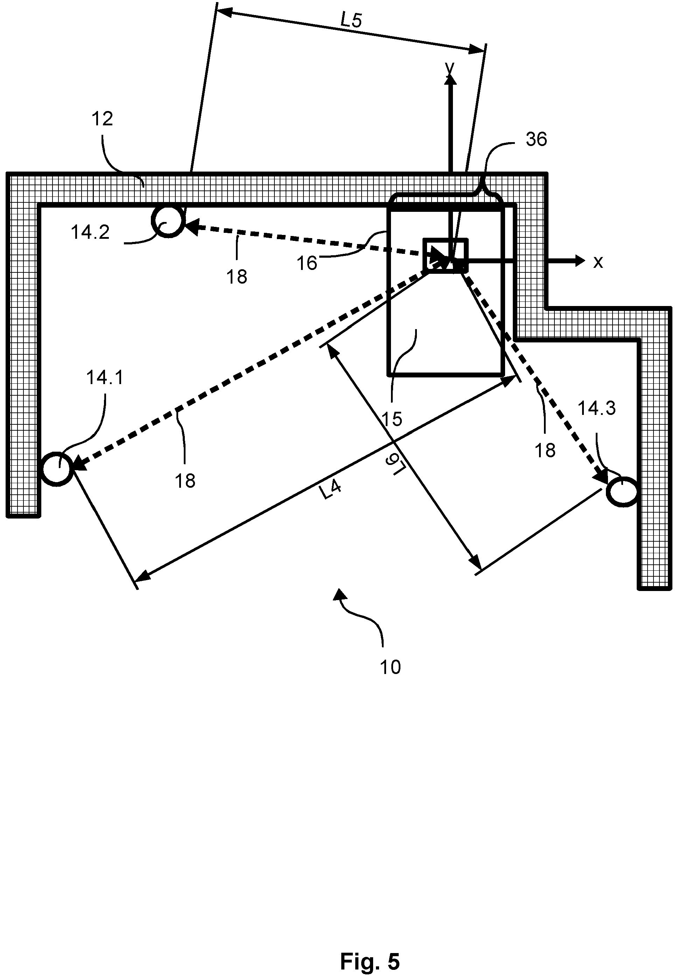

**Fig. 5** zeigt eine schematische Ansicht auf die Baustelle 10 gemäß Fig. 1, bei sich der das Baugerät 15 im Vergleich zu der Situation gemäß Fig. 1 auf einer anderen Position befindet.

Insbesondere kontaktiert das Baugerät 15 die Gebäudewand 12 mechanisch in einem schematisch in Form einer Klammer dargestellten Oberflächenbereich **36** der Gebäudewand 12.

Um zu detektieren, dass das Baugerät 15 die Gebäudewand 12 mechanisch kontaktiert, kann das Baugerät 15 einen Berührungssensor aufweisen.

Nachdem das Baugerät 15 den mechanischen Kontakt mit der Gebäudewand 12 detektiert hat, werden Distanzen **L4, L5** und **L6** zu den Markierungen 14.1, 14.2 und 14.3 mit Hilfe des rotierenden Laserstrahls 18 gemessen. Dies kann beispielsweise analog zu der in Bezug zu Fig. 1 beschriebenen Vorgehensweise erfolgen.

Unter Berücksichtigung der Abmessungen und / oder der Geometrie des Baugeräts 15 wird daraus eine Position des Oberflächenbereichs 36 bestimmt.

Die so bestimmte Position des Oberflächenbereichs 36 kann nun für weitere Positions- und / oder Lagebestimmungen und / oder zur Bestimmung von Positionskorrekturwerten verwendet werden.

Sind beispielsweise eine Soll-Position des Oberflächenbereichs 36 und Positionen der Markierungen 14.1, 14.2 und 14.3 innerhalb eines BIM-Modells bekannt, so kann ein Abweichungswert als Differenz der gemessenen Distanzen L4, L5 und L6 zu den gemäß dem BIM-Modell zu erwartenden Distanzen ermittelt werden. Weitere Positionsmessungen, zum Beispiel nach dem vorangehend beschriebenen Verfahren, können um den so ermittelten Abweichungswert korrigiert werden.

Denkbar ist, dass eine solche Ermittlung eines Abweichungswertes auch mehr als einmalig erfolgt. Beispielsweise kann bei einem weiteren mechanischen Kontakt am selben Oberflächenbereich 36 oder bei einem anderen Oberflächenbereich des selben Bauelements, hier der Gebäudewand 12, oder bei einem mechanischen Kontakt mit einem anderen Bauelement ein weiterer Abweichungswert ermittelt werden.

Denkbar ist auch, ein oder mehrere Distanzmessungen zu einer oder mehreren der Markierungen 14.1, 14.2, 14.3 oder gegebenenfalls weiterer Markierungen, dadurch zu ersetzen, dass die Position des mechanischen Kontakts anstelle der Position der betreffenden Markierung beziehungsweise Markierungen verwendet wird. Eine Distanzmessung per Laserstrahl 18 zu der Position des mechanischen Kontakts kann sich dabei erübrigen.

### Bezugszeichenliste

- 10: Baustelle
- 12: Gebäudewand
- 14.1: Markierung
- 14.2: Markierung
- 14.3: Markierung
- 15: Baugerät
- 16: Positionsmesssystem
- 18: Laserstrahl
- 19: Horizontalablenkeinheit
- 20: Motor
- 22: Spindel
- 24: Prismenspiegel
- 26: Strahlquelle
- 27: Sensoreinheit
- 28: Winkelencoder
- 30: Markierungsflächenbereich
- 32: Messflächenbereich
- 34: Markierungsflächenbereich
- 36: Oberflächenbereich
- 100: Verfahren
- 110: Suchschritt
- 112: Schritt
- 114: Schritt
- 116: Abschlussschritt

Alpha1Sichtwinkel
Alpha2Sichtwinkel
Alpha3Sichtwinkel
   - L1: Distanz
   - L2: Distanz
   - L3: Distanz
   - L4: Distanz
   - L5: Distanz
   - L6: Distanz
   - X: Achse
   - Y: Achse

## Patentansprüche

1. **Verfahren** (100) zur wiederholten Positionsmessung eines als mobile Werkzeugmaschine ausgebildeten Baugeräts (15) auf einer Baustelle (10), beispielsweise auf einer Hochbau-Baustelle oder einer Tiefbau-Baustelle, wobei eine Position relativ zu wenigstens zwei, vorzugsweise wenigstens drei, Markierungen (14.1, 14.2, 14.3) gemessen wird, umfassend die Schritte (110, 112, 114, 116):
a. Direkte Messung der Distanzen (L1, L2, L3) ausgehend von einem am Baugerät (15) angeordneten und / oder ausgebildeten Positionsmesssystem (16) zu wenigstens zwei der Markierungen (14.1, 14.2, 14.3), vorzugsweise zu allen in einem Sichtfeld des Positionsmesssystems (16) liegenden Markierungen (14.1, 14.2, 14.3), und Messung der Sichtwinkel (Alpha1, Alpha2, Alpha3), unter denen die wenigstens zwei der Markierungen (14.1, 14.2, 14.3) vom Positionsmesssystem (16) aus erscheinen, um eine erste Positionsmessung des Baugeräts (15) durchzuführen, und
b. Anpeilen wenigstens zweier der Markierungen (14.1, 14.2, 14.3) vom Positionsmesssystem (16) aus, um eine zweite Positionsmessung des Baugeräts (15) durchzuführen,
**dadurch gekennzeichnet dass**,
wenigstens eine Positionsbestimmung eines Bauelements der Baustelle (10), beispielsweise einer Gebäudewand (12), mittels eines mechanischen Kontaktes des Baugeräts (15) mit einem Oberflächenbereich (38) des Bauelements erfolgt, wobei unter Berücksichtigung der Abmessungen und der Geometrie des Baugeräts (15) eine Position des Oberflächenbereichs (36) bestimmt wird.

2. Verfahren nach dem vorangehenden Anspruch, **dadurch gekennzeichnet, dass** zur Messung der Distanzen (L1, L2, L3) und / oder zur Messung von wenigstens einem der Winkel ein elektromagnetischer Strahl, insbesondere ein Laserstrahl (18), bevorzugt vom Positionsmesssystem (16) aus, ausgestrahlt wird.

3. Verfahren nach einem der vorhergehenden Ansprüche, **dadurch gekennzeichnet, dass** bei der Messung der Distanzen (L1, L2, L3) und / oder der Sichtwinkel (Alpha1, Alpha2, Alpha3) und / oder beim Anpeilen ein Intensitätssensor zur Messung einer Intensität einer Reflexion des Strahls verwendet wird.

4. Verfahren nach einem der vorhergehenden Ansprüche, **dadurch gekennzeichnet, dass**, insbesondere bei der Messung der Sichtwinkel (Alpha1, Alpha2, Alpha3) und / oder beim Anpeilen, eine Inertialmesseinheit und / oder ein Winkelencoder (28) verwendet werden.

5. Verfahren nach einem der vorangehenden Ansprüche, **dadurch gekennzeichnet, dass** der Strahl in einer horizontalen oder zumindest im Wesentlichen horizontalen Ebene, vorzugsweise um 360°, rotiert wird.

6. Verfahren nach einem der vorangehenden Ansprüche, umfassend einen Suchschritt (110), in dem die wenigstens zwei Markierungen (14.1, 14.2, 14.3) innerhalb der Baustelle (10) durch das Positionsmesssystem (16), insbesondere mithilfe des Intensitätssensors, gesucht werden.

7. Verfahren nach einem der vorhergehenden Ansprüche, **dadurch gekennzeichnet, dass** wenigstens eine der Markierungen (14.1, 14.2, 14.3) einen Markierungsflächenbereich (30, 32) mit einem Streifenmuster aufweist.

8. Verfahren nach einem der vorhergehenden Ansprüche, **dadurch gekennzeichnet, dass** wenigstens eine der Markierungen (14.1, 14.2, 14.3) mindestens 30 cm hoch ist.

9. Verfahren nach einem der vorhergehenden Ansprüche, **dadurch gekennzeichnet, dass** die Sichtwinkel (Alpha1, Alpha2, Alpha3) und / oder beim Anpeilen gemessene Winkel relativ zu einem intemen, insbesondere körperbezogenen, Koordinatensystem des Baugeräts (15) gemessen werden.

10. Verfahren nach einem der vorhergehenden Ansprüche, **dadurch gekennzeichnet, dass** wenigstens eine weitere Positionsmessung durchgeführt wird, wobei ein Kamerasystem verwendet wird.

11. Verfahren nach einem der vorhergehenden Ansprüche, **dadurch gekennzeichnet, dass** die Position des mechanischen Kontakts der Position einer, insbesondere erfolgten und / oder zu erfolgenden, Oberflächenbearbeitung des Oberflächenbereiches (36) entspricht.

12. **Positionsmesssystem (16),** eingerichtet zur Ausführung des Verfahrens nach einem der vorhergehenden Ansprüche, umfassend eine Distanzdirektmesseinheit zur direkten Messung einer Distanz zwischen dem Positionsmesssystem (16) und einer Markierung (14.1, 14.2, 14.3), einer Sichtwinkelmesseinheit zur Messung eines Sichtwinkels (Alpha1, Alpha2, Alpha3), unter dem die Markierung (14.1, 14.2, 14.3) vom Positionsmesssystem (16) aus erscheint, eine Anpeileinheit zum Anpeilen der Markierung (14.1, 14.2. 14.3), sowie einen Berührungssensor zur Detektion eines mechanischen Kontakts mit einem Bauelement.

13. Positionsmesssystem nach dem vorhergehenden Anspruch, **dadurch gekennzeichnet, dass** das Positionsmesssystem (16) ein Kamerasystem aufweist.

14. **Mobiles Baugerät** (15), insbesondere für eine Baustelle (10), insbesondere eine Hochbau-Baustelle und/oder eine Tiefbau-Baustelle, beispielsweise ein Bauroboter, eine Handwerkzeugmaschine oder ein Baumessgerät, mit einem Positionsmesssystem (16) nach einem der Ansprüche 12 oder 13.

## Claims

1. Method (100) for repeatedly measuring the position of a construction device (15), which is embodied as a mobile power tool, on a construction site (10), for example on a building-construction construction site or a civil engineering construction site, wherein a position is measured relative to at least two, preferably at least three markings (14.1, 14.2, 14.3), the method comprising the steps (110, 112, 114, 116) of:
a. directly measuring the distances (L1, L2, L3) from a position measurement system (16) arranged and/or formed on the construction device (15) to at least two of the markings (14.1, 14.2, 14.3), preferably to all of the markings (14.1, 14.2, 14.3) located in a field of view of the position measurement system (16), and measuring the apparent viewing angles (Alpha1, Alpha2, Alpha3) of the at least two of the markings (14.1, 14.2, 14.3) from the position measurement system (16) in order to carry out a first measurement of the position of the construction device (15), and
b. taking a bearing of at least two of the markings (14.1, 14.2, 14.3) from the position measurement system (16) in order to carry out a second measurement of the position of the construction device (15),
**characterized in that**
at least one position of a component of the construction site (10), for example a building wall (12), is determined by means of a mechanical contact of the construction device (15) with a surface region (38) of the component, wherein a position of the surface region (36) is determined taking into account the dimensions and geometry of the construction device (15).

2. Method according to the preceding claim, **characterized in that** an electromagnetic beam, in particular a laser beam (18) is emitted, preferably from the position measurement system (16), in order to measure the distances (L1, L2, L3) and/or to measure at least one of the angles.

3. Method according to either of the preceding claims, **characterized in that** an intensity sensor for measuring an intensity of a reflection of the beam is used when measuring the distances (L1, L2, L3) and/or the viewing angles (Alpha1, Alpha2, Alpha3) and/or when taking a bearing.

4. Method according to any of the preceding claims, **characterized in that** an inertial measurement unit and/or an angle encoder (28) are used, in particular when measuring the viewing angles (Alpha1, Alpha2, Alpha3) and/or when taking a bearing.

5. Method according to any of the preceding claims, **characterized in that** the beam is rotated, preferably through 360°, in a horizontal or at least substantially horizontal plane.

6. Method according to any of the preceding claims, comprising a search step (110) in which the at least two markings (14.1, 14.2, 14.3) are searched for within the construction site (10) by means of the position measurement system (16), in particular by means of the intensity sensor.

7. Method according to any of the preceding claims, **characterized in that** at least one of the markings (14.1, 14.2, 14.3) has a marking area (30, 32) with a stripe pattern.

8. Method according to any of the preceding claims, **characterized in that** at least one of the markings (14.1, 14.2, 14.3) has a height of at least 30 cm.

9. Method according to any of the preceding claims, **characterized in that** the viewing angles (Alpha1, Alpha2, Alpha3) and/or angles measured when taking a bearing are measured relative to an internal, in particular body-related, coordinate system of the construction device (15).

10. Method according to any of the preceding claims, **characterized in that** at least one further position measurement is carried out, with a camera system being used.

11. Method according to any of the preceding claims, **characterized in that** the position of the mechanical contact corresponds to the position of a surface work on the surface region (36), in particular surface work that has taken place or will take place.

12. Position measurement system (16), configured to carry out the method according to any of the preceding claims, comprising a direct rangefinder unit for directly measuring a distance between the position measurement system (16) and a marking (14.1, 14.2, 14.3), a viewing angle measurement unit for measuring an apparent viewing angle (Alpha1, Alpha2, Alpha3) of the marking (14.1, 14.2, 14.3) from the position measurement system (16), a bearing unit for taking a bearing of the marking (14.1, 14.2, 14.3), and a contact sensor for detecting mechanical contact with a component.

13. Position measurement system according to the preceding claim, **characterized in that** the position measurement system (16) has a camera system.

14. Mobile construction device (15), in particular for a construction site (10), in particular a building-construction construction site and/or a civil engineering construction site, for example a building robot, a hand-held power tool or a construction measuring device, comprising a position measurement system (16) according to either of Claims 12 and 13.

## Revendications

1. Procédé (100) pour mesurer de manière répétée la position d'un engin de chantier (15), conçu sous la forme d'une machine de travail, mobile sur un chantier (10), par exemple sur un chantier de construction de bâtiments ou de génie civil, dans lequel une position est mesurée par rapport à au moins deux, de préférence au moins trois, repères (14.1, 14.2, 14.3), comprenant les étapes (110, 112, 114, 116) suivantes :
a. mesure directe des distances (L1, L2, L3) à partir d'un système (16) de mesure de position agencé et/ou formé sur l'engin de chantier (15) jusqu'à au moins deux des repères (14.1, 14.2, 14.3), de préférence à tous les repères (14.1, 14.2, 14.3) situés dans un champ visuel du système (16) de mesure de position, et mesure des angles de visibilité (Alpha1, Alpha2, Alpha3) sous lesquels lesdits au moins deux repères (14.1, 14.2, 14.3) apparaissent depuis le système (16) de mesure de position, afin d'effectuer une première mesure de position de l'engin de chantier (15), et
b. localisation d'au moins deux des repères (14.1, 14.2, 14.3) à partir du système (16) de mesure de position afin d'effectuer une deuxième mesure de position de l'engin de chantier (15),
**caractérisé en ce que**
au moins une détermination de position d'un élément de construction du chantier (10), par exemple d'un mur de bâtiment (12), est effectuée au moyen d'un contact mécanique de l'engin de chantier (15) avec une zone de surface (38) de l'élément de construction, une position de la zone de surface (36) étant déterminée en tenant compte des dimensions et de la géométrie de l'engin de chantier (15).

2. Procédé selon la revendication précédente, **caractérisé en ce que**, pour mesurer les distances (L1, L2, L3) et/ou pour mesurer au moins l'un des angles, un faisceau électromagnétique, en particulier un faisceau laser (18), est émis, de préférence à partir du système (16) de mesure de position.

3. Procédé selon l'une des revendications précédentes, **caractérisé en ce que**, lors de la mesure des distances (L1, L2, L3) et/ou des angles de visibilité (Alpha1, Alpha2, Alpha3) et/ou lors de la localisation, un capteur d'intensité est utilisé pour mesurer l'intensité d'une réflexion du faisceau.

4. Procédé selon l'une des revendications précédentes, **caractérisé en ce que**, en particulier lors de la mesure des angles de visibilité (Alpha1, Alpha2, Alpha3) et/ou lors de la localisation, une unité de mesure inertielle et/ou un codeur angulaire (28) sont utilisés.

5. Procédé selon l'une des revendications précédentes, **caractérisé en ce que** le faisceau est tourné dans un plan horizontal ou au moins essentiellement horizontal, de préférence de 360°.

6. Procédé selon l'une des revendications précédentes, comprenant une étape de recherche (110) dans laquelle lesdits au moins deux repères (14.1, 14.2, 14.3) sont recherchés à l'intérieur du chantier (10) par le système (16) de mesure de position, en particulier à l'aide du capteur d'intensité.

7. Procédé selon l'une des revendications précédentes, **caractérisé en ce qu'**au moins l'un des repères (14.1, 14.2, 14.3) présente une zone de marquage (30, 32) avec un motif en bandes.

8. Procédé selon l'une des revendications précédentes, **caractérisé en ce qu'**au moins l'un des repères (14.1, 14.2, 14.3) a une hauteur d'au moins 30cm.

9. Procédé selon l'une des revendications précédentes, **caractérisé en ce que** les angles de visibilité (Alpha1, Alpha2, Alpha3) et/ou les angles mesurés lors de la localisation sont mesurés par rapport à un système de coordonnées interne, en particulier lié au corps, de l'appareil de construction (15).

10. Procédé selon l'une des revendications précédentes, **caractérisé en ce qu'**au moins une autre mesure de position est effectuée en utilisant un système de caméra.

11. Procédé selon l'une des revendications précédentes, **caractérisé en ce que** la position du contact mécanique correspond à la position d'un traitement de surface, en particulier effectué et/ou à effectuer, de la zone de surface (36).

12. Système (16) de mesure de position conçu pour mettre en œuvre le procédé selon l'une des revendications précédentes, comprenant une unité de mesure directe de distance pour mesurer directement une distance entre le système (16) de mesure de position et un repère (14.1, 14.2, 14.3), une unité de mesure d'angle de vision pour mesurer un angle de visibilité (Alpha1, Alpha2, Alpha3) sous lequel le repère (14.1, 14.2, 14.3) apparaît depuis le système (16) de mesure de position, une unité de localisation pour localiser le repère (14.1, 14.2, 14.3), ainsi qu'un capteur de contact pour détecter un contact mécanique avec un composant.

13. Système de mesure de position selon la revendication précédente, **caractérisé en ce que** le système (16) de mesure de position comprend un système de caméra.

14. Engin de chantier mobile (15), en particulier pour un chantier (10), en particulier un chantier de construction de bâtiments et/ou un chantier de génie civil, par exemple un robot de chantier, une machine de travail à main ou un appareil de mesure de construction, comprenant un système (16) de mesure de position selon l'une des revendications 12 ou 13.
